(19) **Europäisches Patentamt** / **European Patent Office** / **Office européen des brevets**

(11) **EP 4 004 516 B1**

(12) **FASCICULE DE BREVET EUROPÉEN**

(45) Date de publication et mention
de la délivrance du brevet:
**09.04.2025   Bulletin 2025/15**

(21) Numéro de dépôt: **20786013.1**

(22) Date de dépôt: **04.09.2020**

(51) Classification Internationale des Brevets (IPC):
***G01M 13/021*** *(2019.01)*

(52) Classification Coopérative des Brevets (CPC):
**G01M 13/021**

(86) Numéro de dépôt international:
**PCT/FR2020/051534**

(87) Numéro de publication internationale:
**WO 2021/044106 (11.03.2021 Gazette 2021/10)**

(54) **PROCÉDÉ DE SURVEILLANCE D'UN TRAIN ÉPICYCLOÏDAL PAR MESURE D'ONDE MÉCANIQUE PROGRESSIVE**

VERFAHREN ZUR ÜBERWACHUNG EINES UMLAUFGETRIEBEZUGES DURCH FORTSCHREITENDE MECHANISCHE WELLENMESSUNG

METHOD FOR MONITORING AN EPICYCLIC GEAR TRAIN BY PROGRESSIVE MECHANICAL WAVE MEASUREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.09.2019  FR 1909851**

(43) Date de publication de la demande:
**01.06.2022   Bulletin 2022/22**

(73) Titulaire: **SAFRAN AIRCRAFT ENGINES**
**75015 Paris (FR)**

(72) Inventeurs:
- **COUPARD, Josselin Xavier**
  **77550 Moissy-Cramayel (FR)**
- **FACQUET, Valentin Francis Joël**
  **77550 Moissy-Cramayel (FR)**
- **GRIFFATON, Julien Christian Pascal**
  **77550 Moissy-Cramayel (FR)**

(74) Mandataire: **Brevalex**
**Tour Trinity**
**1 B Place de la Défense**
**92400 Courbevoie (FR)**

(56) Documents cités:
**CN-A- 105 806 613     US-B1- 10 168 248**

# Description

## DOMAINE TECHNIQUE

L'invention se rapporte au domaine de la surveillance d'un dispositif de transmission mécanique dans un aéronef.

## ÉTAT DE LA TECHNIQUE ANTÉRIEURE

On connaît dans l'art antérieur différents systèmes et procédés de surveillance d'un dispositif de transmission mécanique dans un aéronef.

Dans la demande de brevet EP3217170, il est enseigné de surveiller un tel dispositif de transmission mécanique à l'aide d'un capteur acoustique. Le capteur acoustique mesure un signal acoustique, généré par des vibrations mécaniques dans le dispositif de transmission mécanique. Une anomalie dans le fonctionnement du dispositif de transmission mécanique se traduit par l'apparition de pics caractéristiques dans le spectre en fréquences du signal acoustique mesuré.

Un objectif de la présente invention est de proposer un procédé amélioré pour surveiller un dispositif de transmission mécanique dans un aéronef, qui soit particulièrement adapté à la surveillance d'un train épicycloïdal.

On peut également citer la demande de brevet CN 105 806 613 A et le brevet US 10 168 248 B1.

## EXPOSÉ DE L'INVENTION

Cet objectif est atteint avec un procédé de surveillance d'un train épicycloïdal d'un aéronef, dans lequel le train épicycloïdal comporte deux premières roues dentées montées coaxiales et au moins une seconde roue dentée engrenant avec les deux premières roues dentées, le procédé comportant les étapes suivantes :

- acquisition, à une fréquence d'échantillonnage prédéterminée, de premières valeurs d'un signal formé par une onde mécanique progressive générée dans le train épicycloïdal, lesdites premières valeurs formant des données primaires d'onde mécanique ;
- mesure, à une pluralité d'instants successifs, de valeurs d'une vitesse de rotation de l'une au moins parmi les deux premières roues dentées et l'au moins une seconde roue dentée, lesdites valeurs mesurées formant des données primaires de rotation ;
- à partir des données primaires de rotation, calcul de valeurs d'une vitesse de rotation d'un point de contact entre l'une première roue dentée et l'une seconde roue dentée du train épicycloïdal, lesdites valeurs calculées formant des données secondaires de rotation ;
- à partir des données primaires d'onde mécanique et des données secondaires de rotation, détermination de secondes valeurs dudit signal formé par une onde mécanique progressive générée dans le train épicycloïdal, lesdites secondes valeurs correspondant à un échantillonnage régulier en fonction de la phase dudit point de contact et formant des données secondaires d'onde mécanique ; et
- utilisation des données secondaires d'onde mécanique pour détecter une anomalie liée au fonctionnement du train épicycloïdal.

Les deux premières roues dentées montées coaxiales se nomment respectivement couronne et soleil, où le soleil est entouré par la couronne. L'au moins une seconde roue dentée se nomme satellite.

Les données primaires d'onde mécanique correspondent à un échantillonnage, en fonction du temps, d'un signal formé par une onde mécanique progressive générée dans le train épicycloïdal. Ledit signal se rapporte à une vibration dans un milieu élastique. Il peut s'agir d'un signal acoustique, ou d'un signal vibrationnel apte à être mesuré par un accéléromètre. Un intervalle de temps entre deux instants d'échantillonnage successifs est constant.

Les données primaires de rotation sont mesurées à différents instants, en parallèle de l'acquisition des données primaires d'onde mécanique. Les données primaires de rotation désignent des mesures de la vitesse de rotation respective de l'une au moins des roues dentées du train épicycloïdal. La vitesse de rotation, ou régime moteur, est exprimée par exemple en tour(s) par unité de temps. La vitesse de rotation est mesurée par exemple à l'aide d'un capteur optique détectant le passage d'un point de repère prédéterminé sur la roue dentée.

Les données secondaires de rotation sont des valeurs calculées d'une vitesse de rotation d'un point de contact entre deux roues dentées dans le train épicycloïdal. La vitesse de rotation dudit point de contact forme un régime dit fictif. Le point de contact est un point de contact entre un satellite et la couronne, ou entre un satellite et le soleil. L'un quelconque de ces points de contact peut être considéré. Les valeurs d'une vitesse de rotation du point de contact sont déterminées pour une pluralité d'instants, correspondant de préférence aux instants de mesure des données primaires de rotation.

On utilise ensuite les valeurs calculées d'une vitesse de rotation du point de contact, pour simuler un ré-échantillonnage du signal formé par l'onde mécanique progressive générée dans le train épicycloïdal. Le ré-échantillonnage est cette fois constant en fonction de la phase dudit point de contact. En d'autres termes, on a une différence de phase constante entre deux points du ré-échantillonnage, où la phase se rapporte audit point de contact et est obtenue à partir de la vitesse de rotation dudit point de contact. Ce nouvel échantillonnage du signal formé par l'onde mécanique progressive générée dans le train épicycloïdal forme des données secondaires d'onde mécanique.

On utilise ensuite lesdites données secondaires d'onde mécanique pour détecter une anomalie dans le fonctionnement du train épicycloïdal. Pour cela, on peut utiliser des modèles, associant une anomalie avec des caractéristiques prédéfinies d'une fonction qui dépend desdites données secondaires d'onde mécanique. Les modèles peuvent être déterminés expérimentalement ou par simulations.

L'invention offre ainsi un procédé pour surveiller un train épicycloïdal d'un aéronef, basé sur un ré-échantillonnage astucieux d'un signal formé par une onde mécanique progressive générée dans le train épicycloïdal.

Il peut être avantageux de ré-échantillonner en phase un signal formé par une onde mécanique progressive générée dans un dispositif de transmission mécanique, lorsque ce dernier est un engrenage simple à seulement deux roues dentées. Dans le cas d'un train épicycloïdal, l'agencement complexe des roues dentées incite l'homme du métier à éviter un tel ré-échantillonnage. L'idée à la base de l'invention consiste à conserver un ré-échantillonnage en phase, mais en prenant comme référence non pas l'une des roues dentées du train épicycloïdal, mais un point de contact entre deux de ces roues dentées. Les inventeurs ont pu montrer que cette idée permet d'obtenir des données ré-échantillonnées permettant un repérage efficace d'une anomalie mécanique du train épicycloïdal.

Avantageusement, la vitesse de rotation du point de contact entre une première roue dentée et une seconde roue dentée du train épicycloïdal est une combinaison linéaire des vitesses de rotation respectives desdites première et secondes roues dentées.

L'une au moins desdites vitesses de rotation respectives peut être calculée à partir des données primaires de rotation ($V_{mes\_r}(t_j)$) et des nombres de dents respectifs de deux au moins parmi les deux premières roues dentées et l'au moins une seconde roue dentée.

Selon un mode avantageux de réalisation, l'utilisation des données secondaires d'onde mécanique ($S(\varphi_k)$) pour détecter une anomalie liée au fonctionnement du train épicycloïdal comprend :

- un calcul de données d'analyse, comportant un calcul d'une transformée de Fourier des données secondaires d'onde mécanique ($S(\varphi_k)$), où la transformée de Fourier transforme une fonction d'une phase en une fonction d'un ordre ; et
- l'utilisation desdites données d'analyse pour détecter une anomalie liée au fonctionnement du train épicycloïdal.

On peut alors utiliser des données d'analyse associées à au moins un ordre entier, pour détecter une anomalie liée au fonctionnement du train épicycloïdal.

Le calcul de données d'analyse peut comprendre le calcul d'une densité spectrale de puissance des données secondaires d'onde mécanique ($S(\varphi_k)$).

Alternativement, le calcul de données d'analyse peut comprendre le calcul d'une densité spectrale de puissance moyennée des données secondaires d'onde mécanique ($S(\varphi_k)$).

Alternativement encore, le calcul de données d'analyse peut comprendre le calcul d'un spectrogramme regroupant une pluralité de valeurs d'une densité spectrale de puissance moyennée des données secondaires d'onde mécanique ($S(\varphi_k)$).

Le signal formé par une onde mécanique progressive générée dans le train épicycloïdal peut être un signal acoustique, acquis à l'aide d'un capteur d'onde acoustique. Ce capteur d'onde acoustique est avantageusement agencé en une position espacée du train épicycloïdal.

Alternativement, le signal formé par une onde mécanique progressive générée dans le train épicycloïdal est un signal de vibration, acquis à l'aide d'un accéléromètre.

Le procédé de surveillance peut comprendre en outre une étape de maintenance sur le train épicycloïdal, lorsqu'une anomalie liée au fonctionnement de ce dernier est détectée à l'aide des données secondaires d'onde mécanique ($S(\varphi_k)$).

Enfin, ledit procédé de surveillance peut comporter en outre une étape préliminaire de détermination d'indicateurs de santé, laquelle comporte les sous-étapes suivantes :

- pour une pluralité de vols, acquisition de données primaires d'onde mécanique et de données primaires de rotation, et détermination des données secondaires de rotation et des données secondaires d'onde mécanique correspondantes ;
- pour chacun de la pluralité de vols, calcul de données d'analyse, ledit calcul comportant un calcul d'une transformée de Fourier des données secondaires d'onde mécanique ; et
- mise en corrélation des données d'analyse avec des informations relatives à une anomalie ou une absence d'anomalie de fonctionnement du train épicycloïdal.

L'invention concerne également un système de surveillance pour surveiller un train épicycloïdal d'un aéronef, le système comprenant :

- un train épicycloïdal qui comporte deux premières roues dentées montées coaxiales et au moins une seconde roue dentée engrenant avec les deux premières roues dentées ;
- au moins un capteur d'onde mécanique, agencé pour acquérir, à une fréquence d'échantillonnage prédéterminée, des premières valeurs d'un signal formé par une onde mécanique progressive générée dans le train épicycloïdal, lesdites premières valeurs formant des données primaires d'onde mécanique ($S(t_i)$) ;

- au moins un capteur de vitesse de rotation, agencé pour acquérir, à une pluralité d'instants successifs, des valeurs d'une vitesse de rotation de l'une au moins parmi les deux premières roues dentées et l'au moins une seconde roue dentée, lesdites valeurs mesurées formant des données primaires de rotation ($V_{nes\_r}(t_j)$) ; et
- un processeur, configuré pour recevoir en entrée les données primaires d'onde mécanique ($S(t_i)$) et les données primaires de rotation ($V_{mes\text{-}r}(t_j)$), pour calculer des valeurs ($V_c(t_j)$) d'une vitesse de rotation d'un point de contact entre l'une première roue dentée et l'une seconde roue dentée du train épicycloïdal, pour déterminer des secondes valeurs dudit signal formé par une onde mécanique progressive générée dans le train épicycloïdal, lesdites secondes valeurs étant échantillonnées en fonction d'une phase dudit point de contact, et pour fournir en sortie une information ($D$) relative à la présence ou non d'une anomalie de fonctionnement du train épicycloïdal.

Le capteur d'onde mécanique est typiquement un capteur acoustique, agencé en une position espacée du train épicycloïdal.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1 et 2 illustrent de manière schématique un train épicycloïdal, dans une vue en perspective, respectivement une vue de face ;
- la figure 3 illustre de manière schématique un procédé selon l'invention, pour surveiller le train épicycloïdal de la figure 1 ;
- les figures 4A à 4E illustrent un ré-échantillonnage selon l'invention ;
- les figures 5A et 5B illustrent respectivement le signal formé par une onde mécanique progressive générée dans le train épicycloïdal de la figure 1, en fonction du temps, et une densité spectrale de puissance correspondante ;
- les figures 6A et 6B illustrent respectivement le même signal qu'à la figure 5A représenté cette fois en fonction de la phase d'un point de contact dans le train épicycloïdal, et une densité spectrale de puissance correspondante ;
- les figures 7 et 8 illustrent des vues de détail d'un spectrogramme obtenu à l'aide d'un procédé selon l'invention, centrées respectivement sur l'ordre 1 et sur l'ordre 2 ;
- la figure 9 illustre de façon schématique un système selon l'invention ; et
- la figure 10 illustre de façon schématique une turbomachine d'un aéronef recevant un train épicycloïdal tel que surveillé dans l'invention.

## EXPOSÉ DÉTAILLÉ DE MODES DE RÉALISATION PARTICULIERS

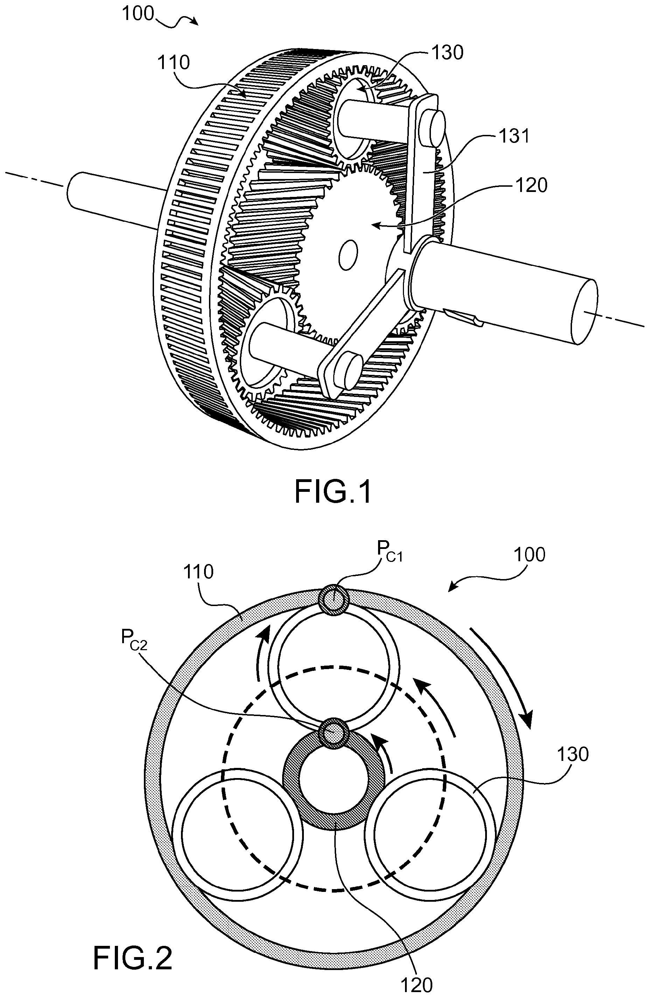

La figure 1 illustre, selon une vue en perspective, un exemple d'un train épicycloïdal 100 auquel l'invention peut s'appliquer. Le train épicycloïdal 100 comporte ici :

- une couronne 110, montée solidaire d'une hélice aval d'un turbomoteur (non représentée) ;
- un soleil 120, monté solidaire d'un arbre relié à une turbine de puissance (non représentée) ; et
- trois satellites 130, montés solidaires d'une hélice amont du turbomoteur (non représentée) par l'intermédiaire d'une pièce de liaison 131 à trois branches.

La couronne 110 et le soleil 120 sont montés coaxiaux, avec la couronne 110 agencée autour du soleil 120. Elles forment ensemble deux premières roues dentées.

Les trois satellites 130 sont équi-répartis autour du soleil 120, et agencés chacun entre la couronne 110 et le soleil 130. Ils forment ensemble trois secondes roues dentées qui engrènent chacune à la fois avec la couronne 110 et le soleil 130. La pièce de liaison 131 a chacune de ses trois branches fixée à l'arbre de rotation de l'un des satellites 130.

La figure 2 illustre, de manière schématique, le train épicycloïdal 100 selon une vue de face. On a représenté par des flèches, le sens de rotation de chacun des éléments du train épicycloïdal 100. Les sens de rotation respectifs de la couronne 110 et du soleil 120 sont opposés. Chacun des trois satellites 130 peut tourner sur lui-même et/ou autour du soleil 120. La rotation des satellites 130 autour du soleil 120 est symbolisée en figure 2 par un cercle en pointillés. Le sens de rotation des satellites 130 autour du soleil 120 correspond au sens de rotation du soleil 120 sur lui-même.

La figure 2 illustre également deux points de contact $P_{C1}$, respectivement $P_{C2}$, dans le train épicycloïdal 100. $P_{C1}$ est le point de contact entre l'un des satellites 130 et la couronne 110. $P_{C2}$ est le point de contact entre l'un des satellites 130 et le soleil 120. Chacun des trois satellites possède deux points de contact, respectivement avec la couronne 110 et avec le soleil 120.

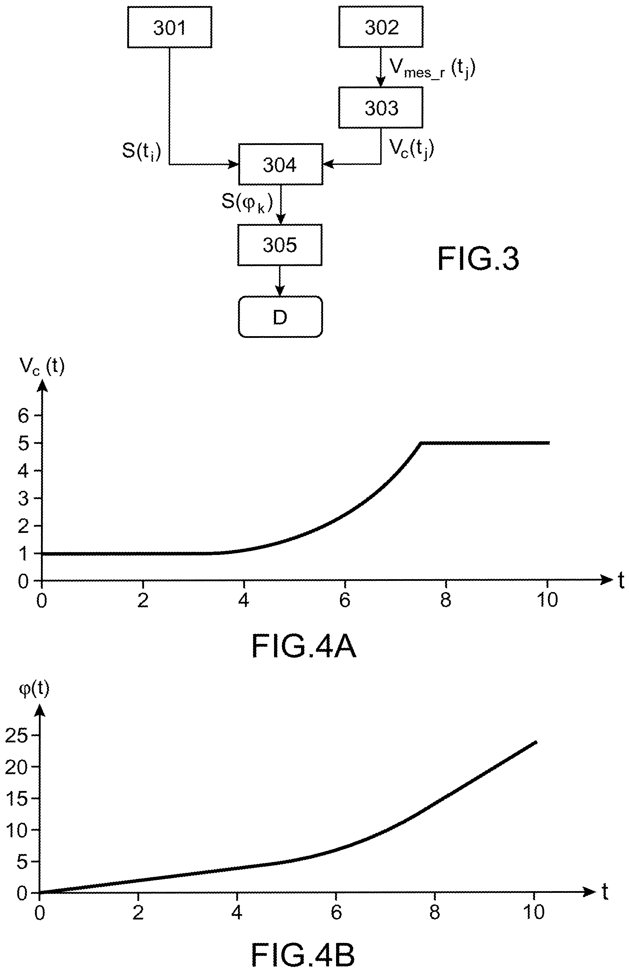

La figure 3 illustre, de manière schématique, un procédé selon l'invention, pour surveiller le train épicycloïdal 100 en fonctionnement.

Dans une première étape 301, on acquiert une série de valeurs $S(t_i)$ d'un signal $S(t)$ formé par une onde mécanique progressive générée dans le train épicycloïdal 100. L'onde mécanique progressive est en particulier une onde élastique. Elle est générée notamment par les entrechoquements des dents des satellites avec les dents de la couronne et les dents du soleil. Les caractéristiques de ces entrechoquements sont fonction notamment des erreurs de fabrication et de la déformation élastique des dents. Le signal $S(t)$ est préférentiellement un signal acoustique, relatif à une onde rayonnée par le train épicycloïdal, et acquis à l'aide d'un capteur d'onde acoustique tel qu'un microphone ou un capteur de pression acoustique. Un signal acoustique étant apte à être propagé par tout milieu solide, liquide ou gazeux, le capteur d'onde acoustique peut être agencé librement, directement sur le train épicycloïdal ou à distance de ce dernier. En variante, le signal $S(t)$ est un signal vibrationnel, relatif à une onde conduite dans un milieu solide élastique, et acquis à l'aide d'un capteur tel qu'un accéléromètre. Dans ce cas, l'accéléromètre doit être agencé en contact physique direct avec le train épicycloïdal ou avec un milieu solide intercalaire lui-même en contact physique direct avec le train épicycloïdal. Les valeurs $S(t_i)$ sont acquises avec une fréquence d'échantillonnage $f_{ech}$. En d'autres termes, les instants d'acquisition $t_i$ associés aux différentes valeurs $S(t_i)$ sont séparés deux à deux par un intervalle de temps fixe. Les valeurs acquises $S(t_i)$ forment des données nommées données primaires d'onde mécanique.

Dans une deuxième étape 302, mise en œuvre en parallèle de l'étape 301, on acquiert une série de valeurs $V_{mes\_r}(t_j)$ de la ou des vitesse(s) de rotation respectives de l'une au moins des roues dentées r parmi la couronne, le soleil, et les trois satellites. Dit autrement, on acquiert une série de valeurs du régime respectif de l'une au moins des roues dentées r parmi la couronne, le soleil, et les trois satellites du train épicycloïdal. Les valeurs de vitesse de rotation $V_{mes\_r}(t_j)$ sont des vitesses angulaires, exprimées par exemple en tour par minute. Chaque vitesse de rotation désigne ici la vitesse de rotation d'une roue dentée, sur elle-même. Dans le cas d'un satellite 130, cette vitesse de rotation se rapporte uniquement à la rotation du satellite 130 sur lui-même, sans considération de son éventuelle rotation autour du soleil 120. On suppose de préférence que les trois satellites présentent une même vitesse de rotation. Les valeurs $V_{mes\_r}(t_j)$ sont acquises à l'aide d'un capteur de type tachymètre, comportant par exemple un capteur optique apte à repérer le passage d'un point de repère prédéterminé sur la roue dentée, ou un capteur apte à mesurer une durée de passage d'une roue dentée (une durée courte correspondant à un passage de dent rapide, et donc à une vitesse de rotation élevée). Le cas échéant, la vitesse de rotation d'une roue dentée est mesurée au niveau d'une hélice ou d'une turbine montée solidaire de cette dernière. Les différentes valeurs $V_{mes\_r}(t_j)$ sont associées à une série d'instants d'acquisition $t_j$. Les valeurs $V_{mes\_r}(t_j)$ forment des données nommées données primaires de rotation.

Dans une troisième étape 303, on utilise les données primaires de rotation, pour calculer des valeurs $V_c(t_j)$ d'une vitesse de rotation, théorique, d'un point de contact dans le train épicycloïdal 100. On nomme également « régime fictif » cette vitesse de rotation. Le point de contact désigne l'un quelconque des points de contact entre l'un des satellites 130 et la couronne 110, respectivement entre l'un des satellites 130 et le soleil 120. La figure 2 illustre deux de ces points de contact, $P_{C1}$ et $P_{C2}$.

La vitesse de rotation du point de contact est une vitesse de rotation considérée dans un référentiel attaché à un aéronef recevant le train épicycloïdal. La vitesse de rotation est la même pour tous les points de contact du train épicycloïdal 100, de sorte que l'on peut considérer indifféremment l'un ou l'autre de ces points de contact.

La vitesse de rotation du point de contact entre deux roues dentées du train épicycloïdal est une combinaison linéaire des vitesses de rotation respectives desdites deux roues dentées. Elle dépend également des nombres de dents respectifs desdites deux roues dentées.

Le calcul des $V_c(t_j)$ utilise donc des valeurs des vitesses de rotation respectives de deux roues dentées en contact, dans le train épicycloïdal. Ces valeurs utilisées peuvent appartenir aux données primaires de rotation, acquises à l'étape 302. En variante, certaines au moins desdites valeurs utilisées peuvent être obtenues par calcul, à partir des données primaires de rotation et de nombres de dents des roues dentées dans le train épicycloïdal. En effet, dans un train épicycloïdal, le rapport des vitesses de rotation de deux roues dentées en contact est fonction d'un rapport entre les nombres de dents respectifs desdites roues. En tout état de cause, le procédé selon l'invention est adapté de préférence pour collecter des valeurs de vitesses de rotation relatives à chacun des trois types de roue dentée du train épicycloïdal (couronne 110, soleil 120, satellite 130). Ces valeurs peuvent être toutes acquises à l'étape 302. En variante, certaines de ces valeurs ne sont pas acquises à l'étape 302, et sont déterminées plutôt par calcul, à l'aide de la relation mentionnée ci-dessus entre les vitesses de rotation et nombre de dents respectifs de deux roues dentées en contact dans un train épicycloïdal.

De préférence, on calcule une valeur $V_c(t_j)$ pour chaque instant $t_j$ tel que défini ci-avant. Les valeurs $V_c(t_j)$ ainsi calculées forment ensemble des données nommées données secondaires de rotation.

Dans une quatrième étape 304, on utilise les données primaires d'onde mécanique, $S(t_i)$, et les données secondaires de rotation, $V_c(t_j)$, pour simuler un échantillonnage à intervalles de phase constants du signal S formé par une onde mécanique progressive générée dans le train épicycloïdal 100. Ladite phase est celle du point de contact dont on a déterminé, à l'étape 303, une vitesse de rotation. Cette étape est détaillée dans la suite, en référence aux figures 4A à 4E. Elle comporte de préférence une interpolation temporelle des valeurs $S(t_i)$ acquises à l'étape 301 (données primaires d'onde mécanique). A l'issue de l'étape 304, on obtient une série de valeurs $S(\varphi_k)$ du signal S formé par l'onde mécanique progressive générée dans le train épicycloïdal 100, où $\varphi_k$ désigne une phase du point de contact considéré à l'étape 303. Les valeurs $S(\varphi_k)$ forment des données nommées données secondaires d'onde mécanique.

Enfin, à l'étape 305, on utilise lesdites données secondaires d'onde mécanique pour détecter une éventuelle anomalie dans le fonctionnement du train épicycloïdal. Les informations relatives à la présence ou l'absence d'une anomalie dans le fonctionnement du train épicycloïdal, et le cas échéant relatives à la nature d'une anomalie détectée, forment ensemble des informations dites de diagnostic, D.

L'anomalie peut se rapporter à une défaillance fonctionnelle du train épicycloïdal, à un endommagement de ses constituants, à un fonctionnement en dehors de conditions nominales d'utilisation (par exemple un démarrage à froid, ou un défaut de lubrification des roues dentées), ou à n'importe quelle autre cause susceptible de modifier l'onde mécanique progressive générée par les entrechoquements des dents des roues dentées en contact dans le train épicycloïdal 100. On peut en particulier détecter un défaut de lubrification des satellites, un accroissement du couple sur les satellites, un défaut de dissipation thermique, un désalignement entre les axes de rotation respectifs d'au moins deux des roues dentées, etc. On peut détecter un endommagement brutal ou une usure progressive du train épicycloïdal.

La détection d'anomalie utilise les données secondaires d'onde mécanique, de préférence transformées pour en faciliter l'analyse. Lesdites données transformées sont nommées données d'analyse. Ladite transformation vise notamment à supprimer le bruit et des effets de contexte. Elle comporte de préférence l'application d'une transformée de Fourier. La transformée de Fourier est appliquée aux données secondaires d'onde mécanique, ou à une fonction obtenue par interpolation desdites données secondaires d'onde mécanique. La transformée de Fourier transforme ici une fonction d'une phase en une fonction d'un ordre. Par exemple, on calcule une densité spectrale de puissance, ou une densité spectrale de puissance moyennée, ou un spectrogramme des densités spectrales de puissance moyennées, des données secondaires d'onde mécanique ou d'une fonction obtenue par interpolation desdites données secondaires d'onde mécanique.

La détection d'une éventuelle anomalie dans le fonctionnement du train épicycloïdal peut utiliser des modèles caractérisant des fonctionnements normaux ou anormaux du train épicycloïdal, avec repérage d'un écart ou d'une similitude par rapport à ces modèles. On nomme ces modèles des indicateurs de santé.

Les indicateurs de santé peuvent être déterminés par simulations numériques, ou à l'aide de mesures expérimentales réalisées sur des trains épicycloïdaux associés à des caractéristiques et conditions de fonctionnement connues. Le procédé selon l'invention peut comprendre des étapes préliminaires de détermination de tels indicateurs de santé, ces étapes préliminaires comportant :

- pour une pluralité de vols d'au moins un aéronef, et le cas échéant une pluralité de phases de vol de chaque vol, acquisition de données primaires d'onde mécanique et de données primaires de rotation, et détermination des données secondaires de rotation et des données secondaires d'onde mécanique correspondantes ;

- pour chacun de la pluralité de vols, et le cas échéant pour chacune de la pluralité de phases de vol de chaque vol, utilisation des données secondaires d'onde mécanique correspondantes pour calculer des données d'analyse ; et

- mise en corrélation desdites données d'analyse avec des informations relatives à la présence ou l'absence d'une anomalie liée au fonctionnement du train épicycloïdal, et le cas échéant relatives à la nature précise de ladite anomalie.

Les phases de vol comprennent notamment une ou plusieurs parmi une phase de décollage, une phase de montée, une phase de croisière, une phase de descente, une phase d'atterrissage, et une phase de roulage. Les données d'analyse correspondent aux données secondaires d'onde mécanique, transformées comme décrit ci-dessus.

Les indicateurs de santé permettent non seulement de détecter un fonctionnement anormal du train épicycloïdal, mais également d'identifier l'anomalie lorsqu'elle est détectée. Il est également possible de repérer une usure du train épicycloïdal à un stade précoce, avant apparition de défauts trop importants. La détection précoce de l'usure du train épicycloïdal offre une grande flexibilité pour planifier une opération de maintenance. On peut ainsi optimiser un calendrier d'opérations de maintenance, de manière à minimiser une durée totale d'immobilisation de l'aéronef recevant le train épicycloïdal.

En tout état de cause, le procédé peut comprendre une étape, non représentée, de maintenance sur le train épicycloïdal 100, mise en œuvre en réponse à la détection d'une anomalie, à l'étape 305.

Les figures 4A à 4E illustrent en détail une étape 304 de ré-échantillonnage synchrone en phase.

La figure 4A illustre la vitesse de rotation du point de contact considéré, $V_c(t)$, en fonction du temps t. L'axe des abscisses est un temps, en secondes. L'axe des ordonnées est une vitesse de rotation, ou régime, en tours par minute. La courbe $V_c(t)$ est obtenue par interpolation des données secondaires de rotation $V_c(t_j)$. Elle correspond ici à une phase d'accélération.

La figure 4B illustre la phase du point de contact considéré, $\varphi(t)$, en fonction du temps t. L'axe des abscisses est un temps, en secondes. L'axe des ordonnées est une phase, en nombre de tours. La fonction $\varphi(t)$ est obtenue en intégrant sur le temps la fonction $V_c(t)$. La phase correspond ainsi à un nombre de tours cumulé effectué par le point de contact considéré.

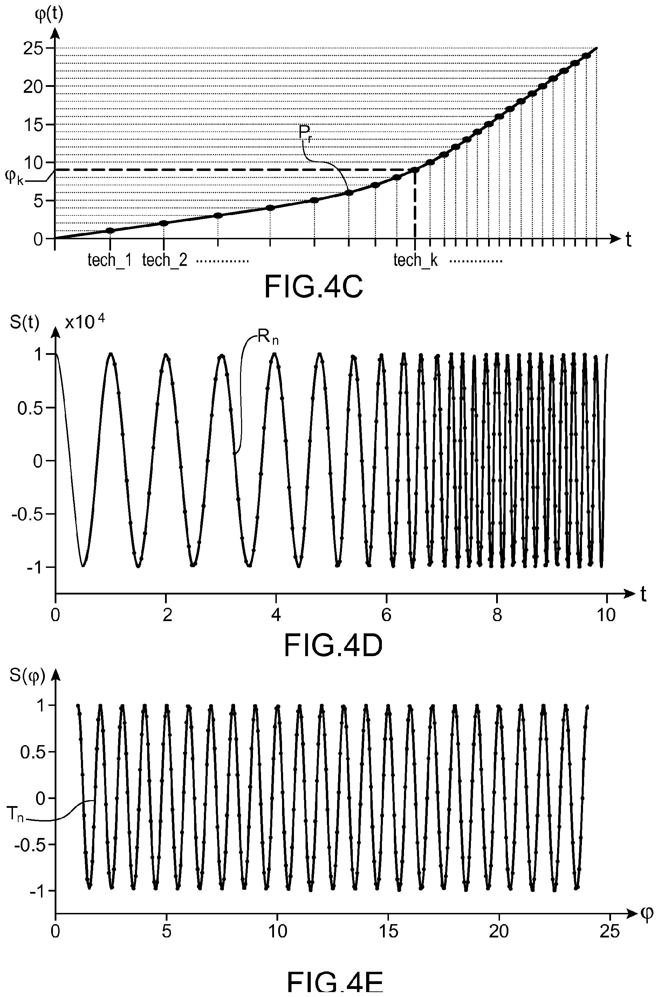

La figure 4C correspond à la figure 4B, sur laquelle on a identifié des points $P_n$ d'échantillonnage régulier en phase. Chaque point $P_n$ se trouve sur la courbe représentative de $\varphi(t)$, et relie une valeur de la phase $\varphi_k$ et une valeur du temps $t_{ech\_k}$. Les différents points $P_n$ sont associés à des valeurs de phase régulièrement espacées. En d'autres termes, la différence entre les phases respectives associées à deux points voisins $P_n$ est une constante, nommée pas d'échantillonnage en phase. Ici, le pas d'échantillonnage en phase est de 1 tour par minute.

La figure 4D illustre le signal S formé par l'onde mécanique progressive générée dans le train épicycloïdal, en fonction du temps t. L'axe des abscisses est un temps, en secondes. L'axe des ordonnées est ici une pression acoustique, en Pa. La courbe $S(t)$ est obtenue par interpolation des données primaires d'onde mécanique $S(t_i)$. Sur la figure 4D, on a représenté également des points d'échantillonnage $R_n$. Les points d'échantillonnage $R_n$ sont des points de la courbe $S(t)$ qui correspondent aux valeurs $t_{ech\_k}$ du temps t précédemment déterminées. Ces valeurs $t_{ech\_k}$ correspondent donc à un échantillonnage régulier en phase. Chaque point d'échantillonnage $R_n$ associe une valeur $S(t_{ech\_k})$ du signal $S(t)$, et une valeur $t_{ech\_k}$ du temps t.

Comme illustré à la figure 4C, chaque valeur $t_{ech\_k}$ du temps est associée à une valeur $\varphi_k$ de la phase du point de contact considéré. On peut donc relier chaque valeur $S(t_{ech\_k})$ du signal $S(t)$ à une valeur $\varphi_k$ de la phase, où la suite de valeurs $\varphi_k$ correspond à un échantillonnage régulier en phase. Les valeurs $S(t_{ech\_k})$ peuvent donc être notées $S(\varphi_k)$. Elles forment les données secondaires d'onde mécanique selon l'invention, associées à un échantillonnage régulier en fonction de la phase du point de contact considéré.

Sur la figure 4E, l'axe des abscisses est une phase, en nombre de tours, et l'axe des ordonnées est une pression acoustique, en Pa. Les points $T_n$ associent chacun l'une desdites valeurs $S(\varphi_k)$ avec la valeur de phase correspondante $\varphi_k$. En interpolant les différents points $T_n$, on obtient une courbe représentative d'une fonction $S(\varphi)$. La fonction $S(\varphi)$ représente le signal S formé par l'onde mécanique progressive générée dans le train épicycloïdal, en fonction de la phase $\varphi$ du point de contact considéré.

Le passage d'un échantillonnage régulier en fonction du temps, à un échantillonnage régulier en fonction d'une phase, permet de s'affranchir de l'effet des variations temporelles des vitesses de rotation des roues dentées du train épicycloïdal. L'une des idées astucieuses à la base de l'invention est d'avoir choisi comme phase celle d'un point de contact du train épicycloïdal, plutôt que la phase de l'une des roues dentées de ce dernier. Les inventeurs ont montré que ce choix permet un repérage plus pertinent des anomalies liées au fonctionnement d'un train épicycloïdal.

Comme expliqué ci-avant, la détection d'une anomalie liée au fonctionnement du train épicycloïdal se fait avantageusement sur des données dites d'analyse, correspondant aux données secondaires d'onde mécanique transformées pour en faciliter l'analyse.

La transformation comprend de préférence l'application d'une fonction qui comporte un calcul de transformée de Fourier. La transformée de Fourier transforme ici une fonction de la phase $\varphi$ du point de contact considéré, en une fonction d'une variable nommée « ordre ».

Ladite fonction peut être une densité spectrale de puissance. La densité spectrale de puissance est une fonction qui représente la répartition dans les ordres de la puissance de la transformée de Fourier (carré du module de cette transformée de Fourier). Pour un signal numérique $x_n$ de N échantillons, un indicateur de la densité spectrale de puissance est un vecteur de $N$ points, dont le $k$ - *ème* élément est défini par :

$$D_X(k) = \frac{|X(k)|^2}{N}$$

avec $D_X$ la densité spectrale de puissance du signal $x$, et $X(k)$ le $k$ - *ème* élément de la transformée de Fourier discrète du signal x.

De manière avantageuse, la transformation des données secondaires d'onde mécanique pour former les données d'analyse peut comporter une interpolation desdites données secondaires d'onde mécanique. On applique ensuite la fonction comportant un calcul de transformée de Fourier au résultat de ladite interpolation.

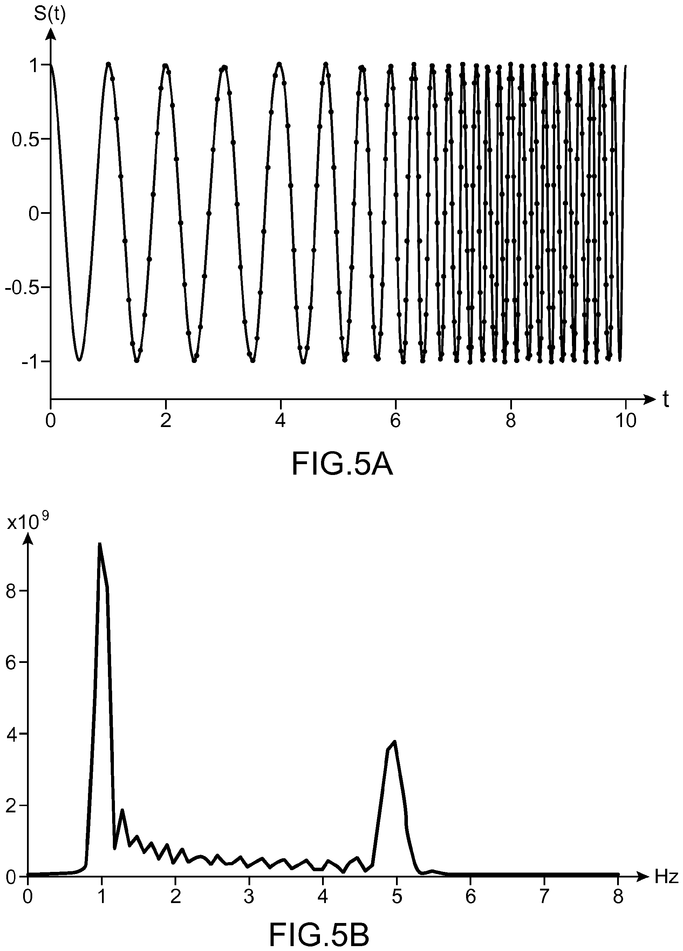

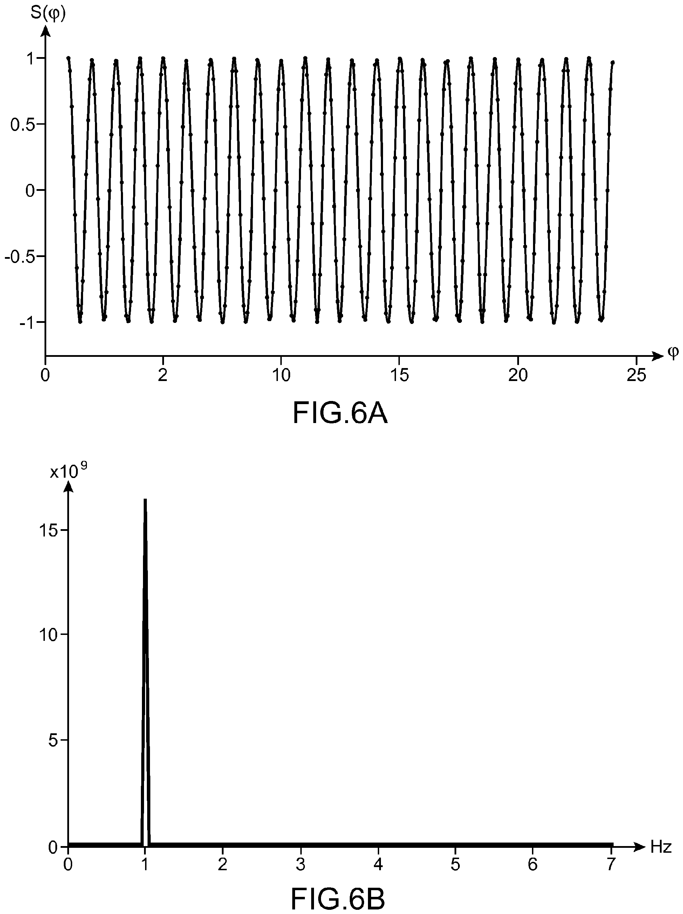

Les figures 5A, 5B et 6A, 6B illustrent l'intérêt de réaliser un ré-échantillonnage régulier en fonction de la phase d'un point de contact puis de passer dans le domaine des ordres.

La figure 5A illustre le signal S formé par l'onde mécanique progressive générée dans le train épicycloïdal, en fonction du temps t. L'axe des abscisses est un temps, en secondes. L'axe des ordonnées est ici une pression acoustique, en Pa. La figure 5B illustre la densité spectrale de puissance du signal de la figure 5A, en fonction d'une fréquence en Hz.

La figure 6A illustre le signal S formé par l'onde mécanique progressive générée dans le train épicycloïdal, en fonction de la phase $\varphi$ du point de contact considéré. L'axe des abscisses est une phase, en nombre de tours, et l'axe des ordonnées est une pression acoustique, en Pa. La figure 6B illustre la densité spectrale de puissance du signal de la figure 6A, en fonction d'un ordre (inverse d'une phase).

Le signal de la figure 6A correspond à un signal ré-échantillonné, dans lequel on s'affranchit de l'effet de variations temporelles des vitesses de rotation dans le train épicycloïdal. En passant ce signal dans le domaine des ordres, on identifie très facilement une composante majoritaire centré sur l'ordre 1 (voir pic d'amplitude de la figure 6B).

Grâce au ré-échantillonnage en fonction de la phase d'un point de contact, suivi d'un passage dans le domaine des ordres, on peut facilement discriminer des composantes du signal dues au train épicycloïdal, et des composantes du signal dues au bruit et à l'environnement autour du train épicycloïdal.

Les valeurs de la densité spectrale de puissance correspondant à des ordres entiers, et plus particulièrement à l'ordre 1, sont les plus pertinentes pour déterminer la présence ou l'absence d'une anomalie liée au fonctionnement du train épicycloïdal, et le cas échéant identifier la nature de l'anomalie. D'autres valeurs des ordres peuvent être utilisées, situées de préférence à des positions symétriques de part et d'autre d'un ordre entier.

On a détaillé ci-dessus l'utilisation d'un calcul de densité spectrale de puissance, pour obtenir les données d'analyse.

Selon une variante avantageuse, on calcule plutôt une densité spectrale de puissance moyennée (des données secondaires d'onde mécanique ou d'une fonction obtenue en interpolant lesdites données secondaires d'onde mécanique). La densité spectrale de puissance moyennée d'un signal est obtenue en multipliant ce signal par une fenêtre d'apodisation, calculant la densité spectrale de puissance du résultat de ladite multiplication, puis répétant ces étapes après un décalage de la fenêtre d'apodisation de 50% de sa longueur, et ainsi de suite jusqu'à obtention d'une série de densités spectrales de puissance dont on calcule alors la moyenne (méthode de Welch). La fenêtre d'apodisation est une fonction qui prend la valeur nulle partout sauf sur une bande étroite où elle présente une forme de pic. Elle est définie par exemple par une fonction de Hamming. Cette technique permet d'éliminer une partie du bruit et des ordres qui ne sont pas dominants.

On peut également utiliser un spectrogramme, regroupant plusieurs densités spectrales de puissance (moyennées ou non) calculées sur des intervalles de temps successifs. Les intervalles de temps considérés se chevauchent. Ils correspondent chacun à un intervalle de phase du point de contact considéré. Sur le spectrogramme, la densité spectrale de puissance associée à un intervalle de phase donné correspond à une ligne verticale. Ladite ligne verticale est alignée sur une valeur de phase qui correspond à la valeur centrale dudit intervalle de phase. Un avantage d'analyser les données secondaires d'onde mécanique sous la forme d'un tel spectrogramme est que l'on réalise l'analyse sur une compilation de nombreuses mesures, ce qui permet de s'affranchir du bruit et des effets marginaux.

Sur le spectrogramme, on distingue différentes lignes remarquables, correspondant chacune à une valeur haute de la densité spectrale de puissance, qui se maintient au cours du temps. Parmi ces lignes remarquables, seules les lignes droites, associées à des valeurs constantes de l'ordre, se rapportent au train épicycloïdal. On peut ainsi discriminer des lignes remarquables liées au train épicycloïdal, et des lignes remarquables liées en milieu environnant. Cette discrimination est particulièrement utile lorsque les données primaires d'onde mécanique sont des données acoustiques, le rayonnement acoustique lié à l'entrechoquement des dents des roues dentées ne contribuant en réalité que faiblement au bruit total émis au niveau d'un carter dans lequel est logé le train épicycloïdal.

On utilise donc des lignes, ou raies du spectrogramme associées à des valeurs constantes de l'ordre, pour déterminer la présence ou l'absence d'une anomalie liée au fonctionnement du train épicycloïdal, et le cas échéant identifier la nature de l'anomalie. Ces raies forment des signatures acoustiques du train épicycloïdal. On utilise notamment des raies du spectrogramme associées à des valeurs entières de l'ordre, notamment la valeur un. La présence ou l'absence d'une ou plusieurs de ces raies forme un indicateur de santé du train épicycloïdal, caractéristique de la présence ou l'absence d'une anomalie de fonctionnement de ce dernier, et le cas échéant caractéristique de la nature particulière de l'anomalie.

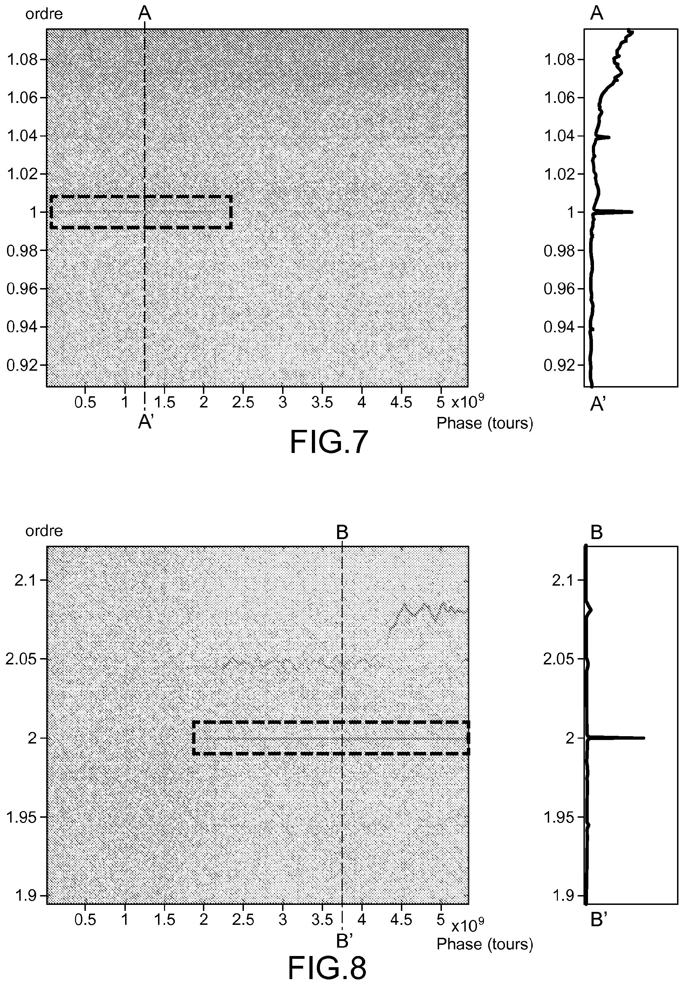

La figure 7 illustre une vue de détail d'un tel spectrogramme, centrée autour de l'ordre 1. L'axe des abscisses est une phase, en nombre de tours. L'axe des ordonnées est un ordre. L'échelle de teintes est une amplitude de la densité spectrale de puissance, en échelle logarithmique. On a représenté sur la droite l'une des densités spectrales de puissance formant le spectrogramme, correspondant ici à la ligne verticale A-A' sur le spectrogramme. Sur la figure 7, on a encadré en pointillés une zone comportant une ligne horizontale, alignée sur l'ordre 1. Cette ligne indique la présence d'un maximum de la densité spectrale de puissance, à l'ordre 1 et de manière prolongée dans le temps.

La figure 8 illustre une vue de détail du même spectrogramme, centrée autour de l'ordre 2. On a représenté sur la droite l'une des densités spectrales de puissance formant le spectrogramme, correspondant ici à la ligne verticale B-B' sur le spectrogramme. On observe une ligne horizontale indiquant la présence d'un maximum de la densité spectrale de puissance, à l'ordre 2 et de manière prolongée dans le temps (voir zone encadrée).

En comparant les figures 7 et 8, on observe une inversion de la prépondérance des ordres 1 et 2 (disparition de la raie à l'ordre 1 qui coïncide avec l'apparition de la raie à l'ordre 2), ce qui traduit un évènement sur le train épicycloïdal. Cet évènement peut être lié à une dégradation brutale du train épicycloïdal, ou simplement à une modification des conditions d'utilisation, par exemple une modification du couple appliqué au train épicycloïdal. Il est donc avantageux de coupler les données d'analyse calculées dans le procédé selon l'invention, avec d'autres mesures et surveillances effectuées simultanément dans l'aéronef (détection d'impact d'objet volant, mesure de la qualité de l'huile lubrifiant les roues dentées du train épicycloïdal, détection de variations de couple, mesures de températures amont et aval, régime, position dans le domaine de vol, etc.).

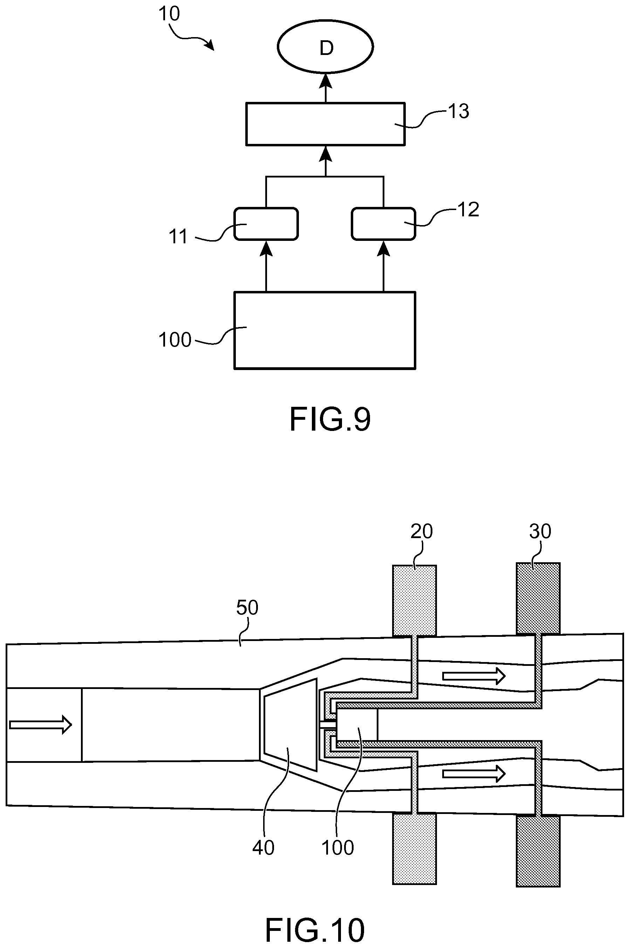

La figure 9 illustre de façon schématique un système 10 selon l'invention pour mettre en œuvre le procédé décrit en référence à la figure 3. Le système 10 comporte :

- un train épicycloïdal 100, tel que décrit en référence aux figures 1, et 2, pouvant faire partie intégrante d'un turbopropulseur ou d'un réducteur;
- au moins un capteur d'onde mécanique 11, par exemple un accéléromètre, ou plus préférentiellement un capteur d'onde acoustique tel qu'un microphone, agencé pour acquérir un signal représentatif d'une onde mécanique progressive générée dans le train épicycloïdal 100 par l'entrechoquement des dents des roues dentées (données primaires d'onde mécanique) ;
- au moins un capteur de vitesse de rotation 12, pour acquérir des mesures de vitesse de rotation relatives à l'une au moins des roues dentées du train épicycloïdal 100 (données primaires de rotation) ; et
- un processeur 13, configuré pour recevoir en entrée les données primaires d'onde mécanique acquises par le capteur d'onde mécanique 11 et les données primaires de rotation acquises par le capteur de vitesse de rotation 12, pour mettre en œuvre les étapes 303, 304 et 305 du procédé illustré en figure 3, et pour fournir en sortie les information de diagnostic $D$ relatives à la présence ou l'absence d'une anomalie dans le fonctionnement du train épicycloïdal, et le cas échéant relatives à la nature de l'anomalie.

Le capteur d'onde mécanique 11 est situé de préférence à l'intérieur d'un logement, pour le protéger de la poussière ou du sable, et à proximité du train épicycloïdal. Il est particulièrement avantageux d'utiliser un capteur d'onde acoustique en tant que capteur d'onde mécanique 11. En effet, on peut ainsi acquérir dans un même signal, des données relatives à chacune des roues dentées composant le train épicycloïdal. En outre, on peut ainsi agencer le capteur d'onde acoustique déporté du train épicycloïdal, sans contact physique direct avec ce dernier. Le capteur d'onde acoustique peut même être situé dans un aéroport, pour mesurer un signal acoustique émis par un aéronef en approche ou au décollage. On surveille alors le train épicycloïdal à partir du bruit qu'il émet, en fonctionnement.

La figure 10 illustre de façon schématique une turbomachine d'un aéronef recevant le train épicycloïdal 100. Ce dernier est relié à une hélice amont 20, une hélice aval 30, et un turbomoteur 40. Les hélices amont et aval sont contra-rotatives (elles tournent en sens inverse) et non-carénées (elles sont situées à l'extérieur d'un carénage 50 recevant le train épicycloïdal 100 et le turbomoteur 40). Les hélices amont et aval présentent de grandes dimensions, avec chacune un diamètre supérieur à 1,5 mètre, par exemple deux mètres.

L'invention est particulièrement adaptée au domaine des turboréacteurs à forte puissance, pour un aéronef, qui voient passer environ 40% de la puissance du moteur et qui supportent des énergies allant jusqu'à 30 MW/h. Elle s'applique notamment à la surveillance d'un dispositif de transmission de puissance à train épicycloïdal, pour transmettre la puissance d'une turbine de puissance vers des hélices amont et aval qui tournent dans des sens opposés.

L'invention est basée sur une comparaison entre un modèle attendu sur le bruit ou les vibrations émises par un train épicycloïdal, et des données d'analyse obtenues par mesures et traitements mathématiques.

On peut mettre en œuvre des alertes, pour informer des opérateurs de maintenance de la présence d'une anomalie liée au fonctionnement du train épicycloïdal. Un service de recommandation de maintenance peut également être mis en place pour l'opérateur de l'aéronef.

De manière avantageuse, on peut combiner les données d'analyse obtenues à l'aide des données secondaires d'onde mécanique selon l'invention, avec des données annexes issues de capteurs de type accéléromètre.

Dans les exemples détaillés ci-dessus, on a illustré l'exemple d'un train épicycloïdal à trois satellites. L'invention n'est pas limitée à cet exemple, et pourra être mise en œuvre pour surveiller toutes sortes de trains épicycloïdaux, avec un nombre quelconque de satellites, utilisés comme réducteur ou comme propulseur, voire même plusieurs trains épicycloïdaux agencés en série.

## Revendications

1. Procédé de surveillance d'un train épicycloïdal (100) d'un aéronef, dans lequel le train épicycloïdal (100) comporte deux premières roues dentées (110, 120) montées coaxiales et au moins une seconde roue dentée (130) engrenant avec les deux premières roues dentées, le procédé comportant les étapes suivantes :

    - acquisition, à une fréquence d'échantillonnage prédéterminée, de premières valeurs ($S(t_i)$) d'un signal formé par une onde mécanique progressive générée dans le train épicycloïdal, lesdites premières valeurs formant des données primaires d'onde mécanique ;
    - mesure, à une pluralité d'instants successifs, de valeurs ($V_{mes\_r}(t_j)$) d'une vitesse de rotation de l'une au moins parmi les deux premières roues dentées et l'au moins une seconde roue dentée (110, 120, 130), lesdites valeurs mesurées formant des données primaires de rotation ;
    - à partir des données primaires d'onde mécanique ($S(t_i)$) au moins, détermination de secondes valeurs ($S(\varphi_k)$) dudit signal formé par une onde mécanique progressive générée dans le train épicycloïdal, lesdites secondes valeurs correspondant à un échantillonnage régulier en fonction d'une phase et formant des données secondaires d'onde mécanique ; et

- utilisation des données secondaires d'onde mécanique ($S(\varphi_k)$) pour détecter une anomalie liée au fonctionnement du train épicycloïdal (100) ;

**caractérisé en ce qu'**il comporte en outre l'étape suivante :

- à partir des données primaires de rotation ($V_{mes\_r}(t_j)$), calcul de valeurs ($V_c(t_j)$) d'une vitesse de rotation d'un point de contact entre l'une première roue dentée (110 ; 120) et l'une seconde roue dentée (130) du train épicycloïdal, lesdites valeurs calculées formant des données secondaires de rotation ;

et **en ce que** les données secondaires d'onde mécanique ($S(\varphi_k)$) sont déterminées à partir des données primaires d'onde mécanique ($S(t_i)$) et des données secondaires de rotation ($V_c(t_j)$), et correspondent à un échantillonnage régulier en fonction de la phase dudit point de contact.

2. Procédé selon la revendication 1, **caractérisé en ce que** la vitesse de rotation du point de contact entre l'une première roue dentée (110 ; 120) et l'une seconde roue dentée (130) du train épicycloïdal est une combinaison linéaire des vitesses de rotation respectives desdites première et secondes roues dentées.

3. Procédé selon la revendication 2, **caractérisé en ce que** l'une au moins desdites vitesses de rotation respectives est calculée à partir des données primaires de rotation ($V_{mes\_r}(t_j)$) et des nombres de dents respectifs de deux au moins parmi les deux premières roues dentées et l'au moins une seconde roue dentée (110, 120, 130).

4. Procédé selon l'une quelconque des revendications 1 à 3, **caractérisé en ce que** l'utilisation des données secondaires d'onde mécanique ($S(\varphi_k)$) pour détecter une anomalie liée au fonctionnement du train épicycloïdal (100) comprend :

- un calcul de données d'analyse, comportant un calcul d'une transformée de Fourier des données secondaires d'onde mécanique ($S(\varphi_k)$), où la transformée de Fourier transforme une fonction d'une phase en une fonction d'un ordre ; et
- l'utilisation desdites données d'analyse pour détecter une anomalie liée au fonctionnement du train épicycloïdal (100).

5. Procédé selon la revendication 4, **caractérisé en ce que** l'on utilise des données d'analyse associées à au moins un ordre entier, pour détecter une anomalie liée au fonctionnement du train épicycloïdal (100).

6. Procédé selon la revendication 4 ou 5, **caractérisé en ce que** le calcul de données d'analyse comprend un calcul d'une densité spectrale de puissance des données secondaires d'onde mécanique ($S(\varphi_k)$).

7. Procédé selon la revendication 4 ou 5, **caractérisé en ce que** le calcul de données d'analyse comprend un calcul d'une densité spectrale de puissance moyennée des données secondaires d'onde mécanique ($S(\varphi_k)$).

8. Procédé selon la revendication 4 ou 5, **caractérisé en ce que** le calcul de données d'analyse comprend un calcul d'un spectrogramme regroupant une pluralité de valeurs d'une densité spectrale de puissance moyennée des données secondaires d'onde mécanique ($S(\varphi_k)$).

9. Procédé selon l'une quelconque des revendications 1 à 8, **caractérisé en ce que** le signal formé par une onde mécanique progressive générée dans le train épicycloïdal est un signal acoustique, acquis à l'aide d'un capteur d'onde acoustique (11).

10. Procédé selon la revendication 9, **caractérisé en ce que** le capteur d'onde acoustique (11) est agencé espacé du train épicycloïdal (100).

11. Procédé selon l'une quelconque des revendications 1 à 8, **caractérisé en ce que** le signal formé par une onde mécanique progressive générée dans le train épicycloïdal est un signal de vibration, acquis à l'aide d'un accéléromètre.

12. Procédé selon l'une quelconque des revendications 1 à 11, **caractérisé en ce qu'**il comporte en outre une étape de maintenance sur le train épicycloïdal (100), lorsqu'une anomalie liée au fonctionnement de ce dernier est détectée à l'aide des données secondaires d'onde mécanique ($S(\varphi_k)$).

13. Procédé selon l'une quelconque des revendications 1 à 12, **caractérisé en ce qu'**il comporte en outre une étape préliminaire de détermination d'indicateurs de santé, laquelle comporte les étapes suivantes :

- pour une pluralité de vols, acquisition de données primaires d'onde mécanique et de données primaires de rotation, et détermination des données secondaire de rotation et des données secondaires d'onde mécanique correspondantes ;

- pour chacun de la pluralité de vols, calcul de données d'analyse, ledit calcul comportant un calcul d'une transformée de Fourier des données secondaires d'onde mécanique ; et
- mise en corrélation des données d'analyse avec des informations relatives à une anomalie ou une absence d'anomalie de fonctionnement du train épicycloïdal (100).

14. Système (10) adapté à la mise en œuvre d'un procédé selon l'une quelconque des revendications 1 à 13, le système comprenant :

- au moins un capteur d'onde mécanique (11), agencé pour acquérir, à une fréquence d'échantillonnage prédéterminée, des premières valeurs d'un signal formé par une onde mécanique progressive générée dans le train épicycloïdal, lesdites premières valeurs formant des données primaires d'onde mécanique ($S(t_i)$) ;
- au moins un capteur de vitesse de rotation (12), agencé pour acquérir, à une pluralité d'instants successifs, des valeurs d'une vitesse de rotation de l'une au moins parmi les deux premières roues dentées et l'au moins une seconde roue dentée, lesdites valeurs mesurées formant des données primaires de rotation ($V_{mes\_r}(t_j)$) ; et
- un processeur (13), configuré pour recevoir en entrée les données primaires d'onde mécanique ($S(t_i)$) et les données primaires de rotation ($V_{mes\_r}(t_j)$), pour déterminer des secondes valeurs ($S(\varphi_k)$) dudit signal formé par une onde mécanique progressive générée dans le train épicycloïdal, lesdites secondes valeurs étant échantillonnées en fonction d'une phase et nommées données secondaires d'onde mécanique ($S(\varphi_k)$, pour déterminer à partir desdites données secondaires d'onde mécanique ($S(\varphi_k)$) une information ($D$) relative à la présence ou non d'une anomalie de fonctionnement du train épicycloïdal, et pour fournir en sortie ladite information (D) ;

**caractérisé en ce que** le processeur (13) est configuré en outre pour :

- calculer des valeurs ($V_c(t_j)$) d'une vitesse de rotation d'un point de contact entre l'une première roue dentée (110, 120) et l'une seconde roue dentée (130) du train épicycloïdal, lesdites valeurs calculées formant des données secondaires de rotation ($V_c(t_j)$) ; et
- utiliser les données primaires d'onde mécanique ($S(t_i)$) et lesdites données secondaires de rotation ($V_c(t_j)$) pour la détermination des données secondaires d'onde mécanique ($S(\varphi_k)$), avec lesdites données secondaires d'onde mécanique ($S(\varphi_k)$) qui correspondent à un échantillonnage régulier en fonction de la phase dudit point de contact.

15. Dispositif (10) selon la revendication 14, **caractérisé en ce que** le capteur d'onde mécanique (11) est un capteur acoustique agencé espacé du train épicycloïdal.

**Patentansprüche**

1. Verfahren zur Überwachung eines Planetenradsatzes (100) eines Flugzeugs, wobei der Planetenradsatz (100) zwei erste koaxial montierte Zahnräder (110, 120) und mindestens ein zweites Zahnrad (130) umfasst, das mit den beiden ersten Zahnrädern in Eingriff kommt, wobei das Verfahren folgende Schritte beinhaltet:

- Erfassung, mit einer vorbestimmten Abtastfrequenz, von ersten Werten ($S(t_i)$) eines Signals, das durch eine im Planetenradsatz erzeugte progressive mechanische Welle gebildet wird, wobei die ersten Werte mechanische Primärwellendaten bilden;
- Messung, zu einer Vielzahl von aufeinanderfolgenden Zeitpunkten, von Werten ($V_{mes\_r}(t_j)$) einer Drehzahl von mindestens einem der ersten beiden Zahnräder und mindestens einem zweiten Zahnrad (110, 120, 130), wobei die gemessenen Werte Primärdrehdaten bilden;
- aus mindestens den mechanischen Primärwellendaten ($S(t_i)$) Bestimmung von zweiten Werten ($S(\varphi_k)$) des von einer progressiven mechanischen Welle gebildeten Signals, die im Planetenradsatz erzeugt wird, wobei die zweiten Werte einer regelmäßigen Abtastung in Abhängigkeit von einer Phase entsprechen und mechanische Sekundärwellendaten bilden; und
- Verwendung der mechanischen Sekundärwellendaten ($S(\varphi_k)$) zur Erkennung einer Störung im Zusammenhang mit der Funktion des Planetenradsatzes (100);

**dadurch gekennzeichnet, dass** es ferner folgenden Schritt beinhaltet:

- aus den Primärdrehdaten ($V_{mes\_r}(t_j)$), Berechnung von Werten ($V_c(t_j)$) einer Drehzahl eines Kontaktpunktes zwischen einem ersten Zahnrad (110; 120) und einem zweiten Zahnrad (130) des Planetenradsatzes, wobei die berechneten Werte Sekundärdrehdaten bilden;

und dass die mechanischen Sekundärwellendaten ($S(\varphi_k)$) aus den mechanischen Primärwellendaten ($S(t_i)$) und den Sekundärdrehdaten ($V_c(t_j)$) bestimmt werden, und einer regelmäßigen Abtastung in Abhängigkeit von der Phase des genannten Kontaktpunktes entsprechen.

2. Verfahren nach Anspruch 1, **dadurch gekennzeichnet, dass** die Drehzahl des Kontaktpunktes zwischen einem ersten Zahnrad (110; 120) und einem zweiten Zahnrad (130) des Planetenradsatzes eine lineare Kombination der jeweiligen Drehzahlen der ersten und zweiten Zahnräder ist.

3. Verfahren nach Anspruch 2, **dadurch gekennzeichnet, dass** mindestens eine der jeweiligen Drehzahlen aus den Primärdrehdaten ($V_{mes\_r}(t_j)$) und den jeweiligen Zahnzahlen von mindestens zwei der zwei ersten Zahnräder und des mindestens einen zweiten Zahnrads (110, 120, 130) berechnet wird.

4. Verfahren nach einem der Ansprüche 1 bis 3, **dadurch gekennzeichnet, dass** die Verwendung der mechanischen Sekundärwellendaten ($S(\varphi_k)$) zur Erkennung einer Störung im Zusammenhang mit dem Betrieb des Planetenradsatzes (100) umfasst:

   - Berechnung von Analysedaten, die eine Berechnung einer Fourier-Transformation der mechanischen Sekundärwellendaten ($S(\varphi_k)$), umfasst, wobei die Fourier-Transformation eine Funktion einer Phase in eine Funktion einer Ordnung umwandelt; und
   - Verwendung der Analysedaten zur Erkennung einer Störung im Zusammenhang mit der Funktion des Planetenradsatzes (100).

5. Verfahren nach Anspruch 4, **dadurch gekennzeichnet, dass** Analysedaten verwendet werden, die mit mindestens einer ganzen Ordnung verbunden sind, um eine Anomalie im Zusammenhang mit der Funktion des Planetenradsatzes (100) zu erkennen.

6. Verfahren nach Anspruch 4 oder 5, **dadurch gekennzeichnet, dass** die Berechnung von Analysedaten eine Berechnung einer spektralen Leistungsdichte der mechanischen Sekundärwellendaten ($S(\varphi_k)$) umfasst.

7. Verfahren nach Anspruch 4 oder 5, **dadurch gekennzeichnet, dass** die Berechnung von Analysedaten eine Berechnung einer durchschnittlichen spektralen Leistungsdichte der mechanischen Sekundärwellendaten ($S(\varphi_k)$) umfasst.

8. Verfahren nach Anspruch 4 oder 5, **dadurch gekennzeichnet, dass** die Berechnung von Analysedaten eine Berechnung eines Spektrogramms umfasst, das mehrere Werte einer durchschnittlichen spektralen Leistungsdichte der mechanischen Sekundärwellendaten ($S(\varphi_k)$) umfasst.

9. Verfahren nach einem der Ansprüche 1 bis 8, **dadurch gekennzeichnet, dass** das durch eine im Planetenradsatz erzeugte progressive mechanische Welle gebildete Signal ein akustisches Signal ist, das mit Hilfe eines Schallwellensensors (11) erfasst wird.

10. Verfahren nach Anspruch 9, **dadurch gekennzeichnet, dass** der Schallwellensensor (11) abgesetzt vom Planetenradsatz (100) angeordnet ist.

11. Verfahren nach einem der Ansprüche 1 bis 8, **dadurch gekennzeichnet, dass** das durch eine im Planetenradsatz erzeugte progressive mechanische Welle gebildete Signal ein Schwingungssignal ist, das mit Hilfe eines Beschleunigungsmessers erfasst wird.

12. Verfahren nach einem der Ansprüche 1 bis 11, **dadurch gekennzeichnet, dass** es ferner einen Wartungsschritt am Planetenradsatz (100) beinhaltet, wenn mit Hilfe der mechanischen Sekundärwellendaten ($S(\varphi_k)$) eine mit dessen Funktion verbundene Störung erkannt wird.

13. Verfahren nach einem der Ansprüche 1 bis 12, **dadurch gekennzeichnet, dass** es ferner einen vorläufigen Schritt zur Bestimmung von Gesundheitsindikatoren beinhaltet, der folgende Schritte beinhaltet:

   - für eine Vielzahl von Flügen, Erfassung von mechanischen Primärwellendaten und Primärdrehdaten und Bestimmung der Sekundärdrehdaten und der entsprechenden mechanischen Sekundärwellendaten;
   - für jede der Vielzahl von Flügen, Berechnung von Analysedaten, wobei die Berechnung eine Berechnung einer Fourier-Transformation der mechanischen Sekundärwellendaten umfasst; und
   - Korrelation der Analysedaten mit Informationen über eine Anomalie oder das Fehlen einer Anomalie des Betriebs des Planetenradsatzes (100).

14. System (10), das für die Durchführung eines Verfahrens nach einem der Ansprüche 1 bis 13 geeignet ist, wobei das System Folgendes umfasst:

   - mindestens einen mechanischen Wellensensor (11), der so angeordnet ist, dass er bei einer vorbestimmten Abtastfrequenz erste Werte eines Signals erfasst, das durch eine im Planetenradsatz erzeugte progressive mechanische Welle gebildet wird, wobei die ersten Werte mechanische Primärwellendaten bilden ($S(t_i)$);
- mindestens einen Drehzahlsensor (12), der so angeordnet ist, dass er an einer Vielzahl von aufeinanderfolgenden Zeitpunkten Werte einer Drehzahl von mindestens einem der ersten beiden Zahnräder und mindestens einem zweiten Zahnrad erfasst, wobei die gemessenen Werte Primärdrehdaten bilden ($V_{mes\_r}(t_j)$); und
- einen Prozessor (13), der so eingerichtet ist, dass er am Eingang die mechanischen Primärwellendaten ($S(t_i)$) und die Primärdrehdaten ($V_{mes\_r}(t_j)$) empfängt, um zweite Werte ($S(\varphi_k)$) des von einer progressiven mechanischen Welle gebildeten Signals zu bestimmen, die im Planetenradsatz erzeugt wird, wobei die zweiten Werte in Abhängigkeit von einer Phase abgetastet werden und als mechanische Sekundärwellendaten ($S(\varphi_k)$) bezeichnet werden, um aus den mechanischen Sekundärwellendaten ($S(\varphi_k)$) eine Information (D) über das Vorhandensein oder Nichtvorhandensein einer Funktionsstörung des Planetenradsatzes zu bestimmen und am Ausgang diese Information (D) bereitzustellen;

**dadurch gekennzeichnet, dass** der Prozessor (13) ferner für Folgendes eingerichtet ist:

- Berechnen von Werten ($V_c(t_j)$) einer Drehzahl eines Kontaktpunktes zwischen einem ersten Zahnrad (110, 120) und einem zweiten Zahnrad (130) des Planetenradsatzes, wobei die berechneten Werte sekundäre Drehdaten ($V_c(t_j)$) bilden; und
- Verwendung der mechanischen Primärwellendaten ($S(t_i)$) und der Sekundärdrehdaten ($V_c(t_j)$) zur Bestimmung der mechanischen Sekundärwellendaten ($S(\varphi_k)$), zusammen mit den mechanischen Sekundärwellendaten ($S(\varphi_k)$), die einer regelmäßigen Abtastung in Abhängigkeit von der Phase des genannten Kontaktpunktes entsprechen.

15. Vorrichtung (10) nach Anspruch 14, **dadurch gekennzeichnet, dass** der mechanische Wellensensor (11) ein vom Planetenradsatz abgesetzt angeordneter akustischer Sensor ist.

## Claims

1. A method for monitoring an epicyclic gear train (100) of an aircraft, wherein the epicyclic gear train (100) includes two coaxially mounted first toothed wheels (110, 120) and at least one second toothed wheel (130) meshing with the first two toothed wheels, the method comprising the following steps of:

- acquiring, at a predetermined sampling frequency, first values ($S(t_i)$) of a signal formed by a progressive mechanical wave generated in the epicyclic gear train, said first values forming primary mechanical wave data;
- measuring, at a plurality of successive time instants, values ($V_{mes\_r}(t_j)$) of a speed of rotation of at least one of the first two toothed wheels and the at least one second toothed wheel (110, 120, 130), said measured values forming primary rotation data;
- from at least the primary mechanical wave data ($S(t_i)$), determining second values ($S(\varphi_k)$) of said signal formed by a progressive mechanical wave generated in the epicyclic gear train, said second values corresponding to a regular sampling as a function of the phase and forming secondary mechanical wave data; and
- using the secondary mechanical wave data ($S(\varphi_k)$) to detect an anomaly related to the operation of the epicyclic gear train (100), characterized it further comprises, the following step:

- from primary rotation data ($V_{mes\_r}(t_j)$), calculating values (Vc(tj)) of a rotational speed of a point of contact between the first gear wheel (110, 120) and the second gear wheel (130) of the epicyclic gear train, said calculated values forming secondary rotation data ; and in that secondary mechanical wave data are determined using the primary mechanical wave data ($S(t_i)$)) and said secondary rotation data (Vc(tj)), and correspond to regular sampling as a function of the phase of said contact point.

2. The method according to claim 1, **characterised in that** the speed of rotation of the contact point between the one first toothed wheel (110; 120) and the one second toothed wheel (130) of the epicyclic gear train is a linear combination of the respective speeds of rotation of said first and second toothed wheels.

3. The method according to claim 2, **characterised in that** at least one of said respective speeds of rotation is calculated from the primary rotation data ($V_{mes}(t_j)$) and the respective numbers of teeth of at least two of the first two toothed wheels and the at least one second toothed wheel (110, 120, 130).

4. The method according to any of claims 1 to 3, **characterised in that** using the secondary mechanical wave data ($S(\varphi_k)$) to detect an anomaly related to the operation of the epicyclic gear train (100) comprises:

- calculating analysis data, including calculating a Fourier transform of the secondary mechanical wave data ($S(\varphi_k)$), where the Fourier trans-

form transforms a function of a phase into a function of an order; and
- using said analysis data to detect an anomaly related to the operation of the epicyclic gear train (100).

5. The method according to claim 4, **characterised by** using analysis data associated with at least one integer order, to detect an anomaly related to the operation of the epicyclic gear train (100).

6. The method according to claim 4 or 5, **characterised in that** calculating analysis data comprises calculating a power spectral density of the secondary mechanical wave data ($S(\varphi_k)$).

7. The method according to claim 4 or 5, **characterised in that** calculating analysis data comprises calculating an averaged power spectral density of the secondary mechanical wave data ($S(\varphi_k)$).

8. The method according to claim 4 or 5, **characterised in that** calculating analysis data comprises calculating a spectrogram gathering a plurality of values of an averaged power spectral density of the secondary mechanical wave data ($S(\varphi_k)$).

9. The method according to any of claims 1 to 8, **characterised in that** the signal formed by a progressive mechanical wave generated in the epicyclic gear train is an acoustic signal, acquired using an acoustic wave sensor (11).

10. The method according to claim 9, **characterised in that** the acoustic wave sensor (11) is arranged spaced from the epicyclic gear train (100).

11. The method according to any of claims 1 to 8, **characterised in that** the signal formed by a progressive mechanical wave generated in the epicyclic gear train is a vibration signal, acquired using an accelerometer.

12. The method according to any of claims 1 to 11, **characterised in that** it further includes a maintenance step on the epicyclic gear train (100), when an anomaly related to the operation of the latter is detected using the secondary mechanical wave data ($S(\varphi_k)$).

13. The method according to any of claims 1 to 12, **characterised in that** it further includes a preliminary step of determining health indicators, which includes the following steps of:

- for a plurality of flights, acquiring primary mechanical wave data and primary rotation data, and determining the corresponding secondary rotation data and secondary mechanical wave data;
- for each of the plurality of flights, calculating analysis data, said calculating including calculating a Fourier transform of the secondary mechanical wave data; and
- correlating the analysis data with information relating to an anomaly or absence of anomaly in the operation of the epicyclic gear train (100).

14. A system (10) adapted to the implementation of a method according to any of the claims 1 to 13, the system comprising:

- at least one mechanical wave sensor (11), arranged to acquire, at a predetermined sampling frequency, first values of a signal formed by a progressive mechanical wave generated in the epicyclic gear train, said first values forming primary mechanical wave data ($S(t_i)$) ;
- at least one speed of rotation sensor (12), arranged to acquire, at a plurality of successive time instants, values of a speed of rotation of at least one of the first two toothed wheels and the at least one second toothed wheel, said measured values forming primary rotation data ($V_{mes\_r}(t_j)$); and
- a processor (13), configured to receive as an input the primary mechanical wave data ($S(t_i)$) and the primary rotation data ($V_{mes\_r}(t_j)$), to determine second values ($S(\varphi_k)$) of said signal formed by a progressive mechanical wave generated in the epicyclic gear train, said second values being sampled as a function of a phase and named mechanical wave secondary data $S(\varphi_k)$, to determine from said mechanical wave secondary data $S(\varphi_k)$, an item of information (D) relating to the presence or absence of an epicyclic gear malfunction, and to output said information (D),

**characterized in that** the processor (13) is further configured to :

- calculate values (Vc(tj)) of a rotational speed of a point of contact between

the first gear wheel (110, 120) and the second gear wheel (130) of the epicyclic gear train, said calculated values forming secondary rotation data (Vc(tj)); and

- using the primary mechanical wave data ($S(t_i)$)) and said secondary secondary rotation data (Vc(tj)) to determine secondary mechanical wave data $S(\varphi_k)$, with said secondary mechanical wave data ($S(\varphi_k)$)

corresponding to regular sampling as a function of the phase of said contact point.

**15.** The device (10) according to claim 14, **characterised in that** the mechanical wave sensor (11) is an acoustic sensor arranged spaced from the epicyclic gear train.

FIG.1

FIG.2

FIG.3

FIG.4A

FIG.4B

FIG.4C

FIG.4D

FIG.4E

FIG.5A

FIG.5B

FIG.6A

FIG.6B

FIG.7

FIG.8

FIG.9

FIG.10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3217170 A
- CN 105806613 A

- US 10168248 B1